# EUROPEAN PATENT SPECIFICATION

(11) **EP 3 944 405 B1**
(45) Date of publication and mention of the grant of the patent: **18.10.2023**
(21) Application number: 20864096.1
(22) Date of filing: 08.09.2020
(51) Int. Cl.: H01M 50/147, H01M 50/183, H01M 50/172, H01M 50/552, H01M 50/553

(54) **TOP COVER ASSEMBLY, SECONDARY BATTERY AND ELECTRIC DEVICE**
ABDECKUNGSANORDNUNG, SEKUNDÄRBATTERIE UND ELEKTRISCHE VORRICHTUNG
ENSEMBLE COUVERCLE SUPÉRIEUR, BATTERIE SECONDAIRE ET DISPOSITIF ÉLECTRIQUE

(30) Priority: 11.09.2019 CN 201921510303 U
(43) Date of publication of application: 26.01.2022
(73) Proprietor: Contemporary Amperex Technology Co., Limited, Ningde City, Fujian 352100 (CN)
(72) Inventor: CHEN, Xinxiang, Ningde, Fujian 352100 (CN); HUANG, Shoujun, Ningde, Fujian 352100 (CN); SU, Huasheng, Ningde, Fujian 352100 (CN); ZHENG, Yulian, Ningde, Fujian 352100 (CN); LI, Xiang, Ningde, Fujian 352100 (CN)
(74) Representative: Herrero & Asociados, S.L.
(86) International application number: PCT/CN2020/113946
(87) International publication number: WO 2021/047494

(56) References cited:
- CN-U- 201 975 435
- CN-U- 203 150 627
- CN-U- 210 110 860
- CN-Y- 201 259 901
- JP-A- 2009 087 729
- US-A1- 2016 336 554

## Description

### TECHNICAL FIELD

The present application relates to the technical field of energy storage devices, and in particular, to a top cover assembly, a secondary battery, and a power consumption apparatus.

### BACKGROUND

A secondary battery includes a cover assembly, a housing, and an electrode assembly. The electrode assembly is accommodated in the housing, the top cover assembly is mounted at a top part of the housing and electrically connected to the electrode assembly, so that electric energy of the electrode assembly is introduced to the outside of the housing through a pole on the top cover assembly.

A top cover plate is provided with a mounting hole. Under normal conditions, the pole is sealed and connected to the inside the mounting hole through a sealing ring so as to ensure the sealing performance between the top cover assembly and the pole. However, there is a technical problem of inconvenient mounting when mounting the sealing ring.

US 2016/336554 A1 discloses a battery, including a container member housing an electrode body and a lead, a gasket, an external terminal, and a restraining member. The container member includes a terminal-connecting part having a thickness of 0.3 mm or less. The terminal-connecting part includes a through hole including a rising part. The gasket includes a hollow shaft inserted into the rising part. The external terminal includes a terminal shift. The restraining member restrains at least a part of the diameter-reduction part of the rising part and the shaft of the gasket. The inclination angle of the rising part is larger than the inclination angle of the terminal shaft.

### SUMMARY

Embodiments of the present application provide a top cover assembly, a secondary battery, and a power consumption apparatus, so as to improve the convenience of mounting the sealing ring.

A first aspect of the embodiments of the present application provides a top cover assembly, which includes:
a top cover plate, the top cover plate provided with a mounting hole, and the mounting hole including a sealing section hole; a pole, inserted into the mounting hole, the pole including a sealing shaft section, the sealing shaft section inserted into the sealing hole section, and a side wall of the sealing hole section and a side wall of the sealing shaft section both tilted with respect to an axis of the mounting hole; and a sealing ring, disposed between the side wall of the sealing hole section and the side wall of the sealing shaft section, a thickness of the sealing ring 12 is less or equal to a thickness of the top cover plate 10, a top part of the sealing ring 12 does not exceed a top part of the top cover plate 10, and a bottom part of the sealing ring 12 does not exceed a bottom part of the top cover plate 10.

The side wall of the sealing hole section and the side wall of the sealing shaft section are both tilted with respect to the axis of the mounting hole, so that the sealing hole section and the sealing shaft section have a structure that is small on top and large on bottom or large on the top and small on the bottom. So when the pole is inserted into the mounting hole along a direction of the axis of the mounting hole, the distance between the side wall of the sealing hole section and the side wall of the sealing shaft section gradually decreases, creating a squeeze to the sealing ring along a direction perpendicular to the side wall until the sealing ring is mounted in place. It is convenient to mount and can effectively avoid displacement or damage of the sealing ring during the mounting of the pole.

Through the design of the thickness of the sealing ring less than or equal to the thickness of the top cover plate, both the sealing ring can be fully compressed and an effective utilization rate of the sealing ring can be increased, but also an overall thickness of the top cover plate can also be reduced, and the energy density of the secondary battery can be increased.

In some embodiments, along a direction pointing from a bottom part to a top part of the top cover plate, the side wall of the sealing hole section and the side wall of the sealing shaft section are both tilted in a direction close to the axis of the mounting hole.

The sealing hole section and the sealing shaft section have a structure that is small on the top and large on the bottom, a bottom end of the sealing hole section and the sealing shaft section is an end having a larger diameter, and a top end is an end having a smaller diameter. The pole is mounted into the mounting hole from bottom to top, and is fixed at the top part of the top cover plate, such that it is more convenient to mount and fix the pole.

In some embodiments, the side wall of the sealing hole section and the side wall of the sealing shaft section are tilted with respect to the axis of the mounting hole at an angle of 5° to 45°.

An angle α of which the side wall of the sealing hole section and the side wall of the sealing shaft section are tilted with respect to the axis of the mounting hole is designed, such that the tilted angle α is located between 5° to 45°. In this way, the mounting of the sealing ring can be facilitated and the reliability of the sealing performance of the sealing ring can be ensured.

In some embodiments, along a thickness direction of the top cover plate, a distance between the side wall of the sealing hole section and the side wall of the sealing shaft section is the same everywhere.

The distance between the sealing hole section and the sealing shaft section along a radial direction of the mounting hole is the same at any thickness position of the top cover plate, such that a uniform mounting gap is formed between the sealing hole section and the sealing shaft section.

In some embodiments, a generatrix of the sealing hole section and a generatrix of the sealing shaft section are both straight lines, and the generatrix of the sealing hole section is parallel to the generatrix of the sealing shaft section.

In the present embodiment, the generatrix of the sealing hole section and the generatrix of the sealing shaft section are both straight lines, accordingly, the sealing hole section is a circular table shaped hole, and the sealing shaft section is a circular table shaped shaft, which facilitates the process of the sealing hole section and the sealing shaft section, and increases the convenience of process.

When the sealing ring is disposed between the side wall of the sealing hole section and the side wall of the sealing shaft section, the sealing ring can be uniformly compressed to ensure a sealing effect of the sealing ring.

In some embodiments, the top cover assembly provided by the present application further includes a first insulating member and a second insulating member, and the first insulating member and the second insulating member are respectively located at both sides of the top cover plate; the first insulating member, the second insulating member, the side wall of the sealing hole section, and the side wall of the sealing shaft section form a sealing cavity, and the sealing ring is located in the sealing cavity.

Through the arrangement of the first insulating member and the second insulating member, the insulation between the pole and the top cover plate can be realized, avoiding a short circuit caused by the contact between the pole and the top cover plate.

In addition, the first insulating member, the second insulating member, the side wall of the sealing hole section, and the side wall of the sealing shaft section form a sealing cavity, and the sealing ring is located in the sealing cavity. The first insulating member and the second insulating member form a restraint on the sealing ring at two ends of the mounting hole along the axis direction respectively, to prevent the sealing ring from slipping off along an end part of the sealing hole section during the process of the pole being inserted into the mounting hole and squeezing the sealing ring. This affects an effective contact area between the sealing ring and the sealing hole section and an effective contact area between the sealing ring and the sealing shaft section, thereby improving the reliability of the sealing performance.

In some embodiments, a gap is left at between least one top corner of the sealing cavity and the sealing ring, and the gap allows an elastic restoring force of the sealing ring to be released, thereby avoiding damage to the sealing ring under the action of an excessive pressing force.

In some embodiments, the first insulating member is disposed at an end of the mounting hole having a smaller diameter. The mounting hole further includes a restraint hole section, and the restraint hole section is disposed at an end of the sealing hole section facing the first insulating member, and communicated with the sealing hole section. The first insulating member is provided with a restraint protrusion, and the restraint protrusion is located between the restraint hole section and the pole.

Where, a restraint hole section is provided at an end of the sealing hole section having a smaller diameter, so an obtuse angle is formed between an inner wall of the sealing hole section and an inner wall of the restraint hole section, which effectively prevents damage to edges of the sealing hole section and scratches on the sealing ring.

In addition, the first insulating member is provided with a restraint protrusion, and the restraint protrusion is located between the restraint hole section and the pole. On the one hand, the restraint protrusion forms a reliable positioning and insulation between the top cover plate and the pole, preventing the pole from wobbling or short-circuiting with the top cover plate; on the other hand, the sealing ring is ensured to be completely accommodated in the sealing hole section, forming a reliable sealing.

In some embodiments, the top cover plate is made of an insulating material. In this way, the top cover plate can be provided insulated from the pole, and preventing the short circuit caused by contact between the pole and the top cover plate and the safety is improved.

A second aspect of the embodiments of the present application provides a secondary batter, which includes any one top cover plate provided by the present application.

Since the secondary battery in the embodiment includes the above top cover assembly, and accordingly also has an advantage of the top cover assembly. That is, the side wall of the sealing hole section and the side wall of the sealing shaft section both tilted with respect to the axis of the mounting hole, so that the sealing hole section and the sealing shaft section have a structure that is small on top and large on bottom or large on the top and small on the bottom. So when the pole is inserted into the mounting hole along the direction of the axis of the mounting hole, the distance between the side wall of the sealing hole section and the side wall of the sealing shaft section gradually decreases, creating a squeeze to the sealing ring along the direction perpendicular to the side wall until the sealing ring is mounted in place. It is convenient to mount and can effectively avoid displacement or damage of the sealing ring during the mounting of the pole.

A third aspect of the embodiments of the present application provides a power consumption apparatus, which includes the secondary battery provided by the present application, and the secondary battery is configured to provide electric energy.

Since the power consumption in the embodiment includes the above top cover assembly, and accordingly, also has the advantage of the top cover assembly. That is, the side wall of the sealing hole section and the side wall of the sealing shaft section are both tilted with respect to the axis of the mounting hole, so that the sealing hole section and the sealing shaft section present have a structure that is small on top and large on bottom or large on the top and small on the bottom. So when the pole is inserted into the mounting hole along the direction of the axis of the mounting hole, the distance between the side wall of the sealing hole section and the side wall of the sealing shaft section gradually decreases, creating a squeeze to the sealing ring along the direction perpendicular to the side wall until the sealing ring is mounted in place. It is convenient to mount and can effectively avoid displacement or damage of the sealing ring during the mounting of the pole.

It should be understood that, the foregoing general description and the coming detailed description are merely exemplary and cannot limit the present application.

### BRIEF DESCRIPTION OF DRAWINGS

FIG. 1 is a schematic structure diagram of a secondary battery provided by an embodiment of the present application;
FIG. 2 is an exploded schematic structure diagram of a secondary battery provided by an embodiment of the present application;
FIG. 3 is an exploded schematic structure diagram of a top cover assembly provided by an embodiment of the present application;
FIG. 4 is a schematic profile structure diagram of a top cover assembly provided by an embodiment of the present application;
FIG. 5 is a locally enlarged view of FIG. 4;
FIG. 6 is a schematic diagram of a partial structure of a top cover plate in FIG. 5;
FIG. 7 is a schematic structure diagram of a pole in FIG. 5;
FIG. 8 is a schematic diagram of a fitting structure of a top cover plate and a pole in FIG. 5;
FIG. 9 is a schematic diagram of a fitting structure of a top cover plate, a pole, a first insulating member, and a second insulating member in FIG. 5; and
FIG. 10 is a schematic diagram of a partial structure of a first insulating member in FIG. 5.

### REFERENCE SIGNS:

1-Top cover assembly;
   10- Top cover plate;
      100-Mounting hole;
         100a-Sealing hole section;
         100b-Restraint hole section;
      101-Sealing cavity;
      102-Gap;
   11-Pole;
      110-Sealing shaft section;
   12-Sealing ring;
   13-First insulating member;
      130-Restraint protrusion;
   14-Second insulating member;
   15- Terminal board;
   16- Adapting sheet;
   17-Explosion-proof valve;
   18-Explosion-proof valve patch;
   19-Injection hole;
2-Housing;
3-Electrode assembly; and
4-Insulating membrane.

The accompanying drawings herein, which are incorporated in and constitute a part of the specification, illustrate embodiments that conform to the present application, and serve to explain the principles of the present application in combination with the specification.

In order to illustrate the technical solution in the embodiments of the present application more clearly, brief description will be made below to the drawings required in the embodiments of the present application, and apparently, the drawings described below are some embodiments of the present application only, and other drawings could be obtained based on these drawings by those ordinary skilled in the art without creative efforts.

### DESCRIPTION OF EMBODIMENTS

To make the objectives, technical solutions, and advantages of the present application clearer and more comprehensible, the present application will be further described below in detail with reference to the accompanying drawings and embodiments. It should be understood that the specific embodiments described herein are merely used to explain the present application, but are not intended to limit the present application.

In the description of the present application, unless otherwise specified and limited explicitly, the terms such as "first" and "second" are merely intended for a purpose of description, and shall not be understood as an indication or implication of relative importance. Unless otherwise specified or illustrated, the term "a plurality of" refers to two or more; the terms "connection" and "fixing" should be understood broadly, for example, the "connection" may either be a fixed connection, or a detachable connection, or an integrated connection, or an electrical connection; and the "connection" may either be a direction connection, or an indirect connection through an intermediary. Those of ordinary skill in the art may appreciate the specific meanings of the foregoing terms in the present application according to specific circumstances.

In the description of the specification, it should be understood that the terms representing directions such as "up" and "down" described in the embodiments of the present application are described from the angles shown in the accompanying drawings, and should not be understood as limitation on the embodiments of the present application. In addition, in the context, it should also be understood that when it is mentioned that an element is connected "on" or "under" another element, it can not only be directly connected "on" or "under" another element, but also be indirectly connected "on" or "under" another element through an intermediate element.

An inventor found that when a pole is sealed and connected to a mounting hole through a sealing ring, usually, the sealing ring is L-shaped in cross-section (hereinafter referred to as "L-shaped sealing ring"). The upper half portion of the L-shaped sealing ring (that is, the vertical arm portion of the "L" shape) extending into the mounting hole and the lower half portion (that is, the bottom arm portion of the "L" shape) located at one side of the top cover plate in a thickness direction. The L-shaped sealing ring is sealed by squeezing the lower half portion of sealing ring by the force of the secondary battery in a height direction. The lower half portion of the L-shaped sealing ring is located at one side of the top cover plate, which occupies the space in the height direction, resulting in a reduction in the energy density of the secondary battery. By removing the lower half portion of the L-shaped sealing ring, only the portion of the sealing ring located in the mounting hole is remained, i.e. the shape of the cross-section is changed to an approximate "O" shape, hereinafter referred to as the "O-shaped sealing ring", so as to improve the energy density of the secondary battery. The inventor found that this structure has a technical problem of inconvenient mounting of the sealing ring. Based on the inventor's findings, the present application provides a new top cover assembly to improve the convenience of the mounting of the sealing ring.

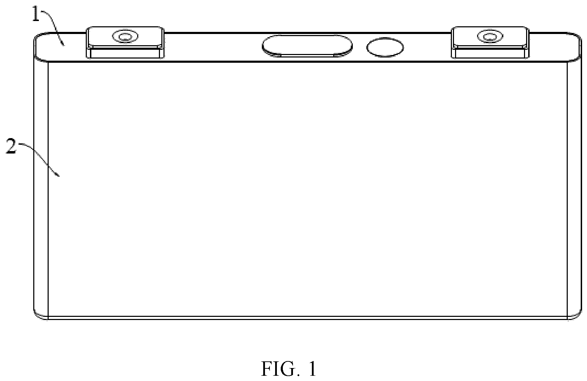

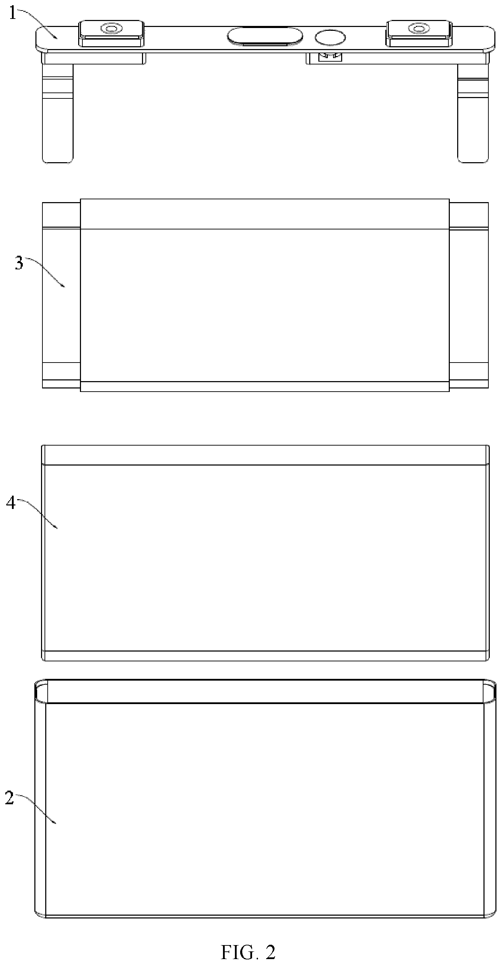

As shown in FIGS. 1 and 2, embodiments of the present application provide a secondary battery, including a top cover assembly 1, a housing 2 and an electrode assembly 3. Where, the housing 2 can be a hexahedral shape or other shapes, and an accommodating cavity is formed inside the housing 2 to accommodate the electrode assembly 3 and electrolyte. There is an opening at an end of the housing 2 so that the electrode assembly 3 can be placed in the accommodating cavity in the housing 2 through the opening, and the accommodating cavity can be provided with a plurality of electrode assemblies 3, and the plurality of electrode assemblies 3 are stacked on each other. Where, the housing 2 may include a metallic material, such as aluminium or aluminium alloy, etc., or it may include an insulating material, such as plastic, etc. When the housing 2 includes a metallic material, an insulating membrane 4 may be provided in the housing 2.

The electrode assembly includes an electrode unit and tabs, and the tabs may be disposed at two end parts of the electrode unit, or may be disposed at intervals on a top part of the electrode unit. The electrode unit includes a positive electrode plate, a negative electrode plate, and a separator. The separator is located between adjacent positive electrode plate and negative electrode plate to separate the positive electrode plate from the negative electrode plate.

In a possible design, the positive electrode plate, the separator, and the negative electrode plate are stacked in sequence and wound to form the electrode unit of the electrode assembly 3, that is, the electrode unit is a winding structure. In another possible design, the positive electrode plate, the separator, and the negative electrode plate are stacked in sequence to form the electrode unit of the electrode assembly, and the electrode unit is a laminated structure. In the meantime, the electrode unit is formed with a gap, through which the electrolyte can enter the electrode unit and infiltrate the positive electrode plate and the negative electrode plate.

Where, the positive electrode plate includes a positive electrode current collector (for example, aluminium foil) and a layer of positive active substance (for example, ternary material, lithium iron phosphate, or lithium cobaltate) coated on a surface of the positive electrode current collector. The negative electrode plate includes a negative electrode current collector (for example, copper foil) and a layer of negative active substance (for example, graphite, carbon, or silicon) coated on a surface of the negative electrode current collector. At the positive electrode of the electrode assembly 3, the tab is connected to the positive electrode plate and extends from the electrode unit, and the tab may be formed by directly cutting the positive electrode current collector. At the negative electrode of the electrode assembly 3, the tab is connected to the negative electrode plate and extends from the electrode unit, and the tab may be formed by directly cutting the negative electrode current collector.

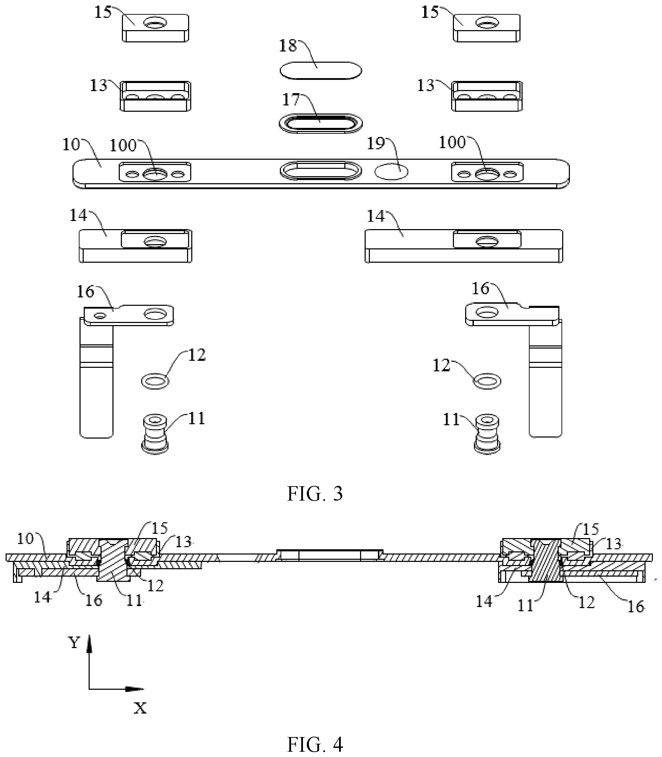

As shown in FIGS. 3 to 5, the top cover assembly 1 provided in the embodiments of the present application includes a top cover plate 10, poles 11 and sealing rings 12. The top cover plate 10 is fixed at the opening of the housing 2. A length direction of the top cover plate 10 is the direction X shown in FIG. 4, and a thickness direction of the top cover plate 10 is the direction Y shown in FIG. 4. The top cover plate 10 is provided with an explosion-proof valve 17 and an explosion-proof valve patch 18 so as to enclose the electrode assembly and the electrolyte in the accommodating cavity of the housing 2. The top cover plate 10 is also provided with an injection hole 19 to inject the electrolyte into the accommodating cavity of the housing 2. The top cover plate 10 is provided with mounting holes 100, and the mounting holes 100 penetrate the top cover plate 10 in the thickness direction (direction Y). The poles 11 are inserted into the mounting holes 100, sealed and connected to the inside of the mounting holes 100, and the poles 11 can be riveted to the top cover plate 10 through terminal boards 15. The poles 11 include a positive electrode pole and a negative electrode pole, and the two electrode poles 11 are electrically connected to the corresponding tab through adapting sheets 16. Similarly, the adapting sheets 16 include a positive electrode adapting sheet and a negative electrode adapting sheet.

Where, a mounting hole 100 includes a sealing hole section 100a, a pole 11 includes a sealing shaft section 110, the sealing shaft section 110 is inserted into the sealing hole section 100a, and a side wall of the sealing hole section 100a and a side wall of the sealing shaft section 110 are both tilted with respect to an axis of the mounting hole 100. A gap is provided between the sealing hole section 100a and the sealing shaft section 110. A sealing ring 12 is provided between the side wall of the sealing hole section 100a and the side wall of the sealing shaft section 110, that is, the sealing ring 12 is disposed in the above gap.

During the mounting, the sealing ring 12 is inserted into the mounting hole 100 along an end of the mounting hole 100 having a larger diameter, and an end of the pole 11 having a smaller diameter is mounted into an inner ring of the sealing ring 12 so that the sealing ring 12 is positioned between the sealing hole section 100a and the sealing shaft section 110. When the pole 11 is inserted into the mounting hole 100 along a direction of the axis of the mounting hole 100, the distance between the side wall of the sealing hole section 100a and the side wall of the sealing shaft section 110 gradually decreases, creating a squeeze to the sealing ring 12 along a direction perpendicular to the side wall until the sealing ring 12 is mounted in place. It is convenient to mount and can effectively avoid displacement or damage of the sealing ring 12 during the mounting procedure of the pole 11.

In addition, since the side wall of the sealing hole section 100a and the side wall of the sealing shaft section 110 are both tilted with respect to the axis of the mounting hole 100, the distance between the two along the direction perpendicular to the side wall is less than the distance between the two along the radial direction of the mounting hole 100, thus enabling a greater squeezing effect on the sealing ring 12, and achieving a reliable sealing performance.

In some embodiments, "the side wall of the sealing hole section 100a and the side wall of the sealing shaft section 110 are both tilted with respect to the axis of the mounting hole 100" means that along the thickness direction of the top cover plate 10, an aperture of the sealing hole section 100a gradually changes, a shaft diameter of the sealing shaft section 110 gradually changes, so that the sealing hole section 100a and the sealing shaft section 110 both present a structure with an large end and an small end.

Where, along the thickness direction of the top cover plate 10, the aperture of the sealing hole section 100a and the shaft diameter of the sealing shaft section 110 may be changed linearly such that a generatrix of the sealing hole section 100a and a generatrix of the sealing shaft section 110 are both straight lines. The aperture of the sealing hole section 100a and the shaft diameter of the sealing shaft section 110 may also change non-linearly such that the generatrix of the sealing hole section 100a and the generatrix of the sealing shaft section 110 may be non-straight lines (for example, a curve line or a broken line, etc.).

In some embodiments, along the thickness direction of the top cover plate 10, a distance (a distance along the radial direction of the mounting hole 100) between the side wall of the sealing hole section 100a and the side wall of the sealing shaft section 110 is the same everywhere. That is, at any thickness position of the top cover plate 10, the distance between the sealing hole section 100a and the sealing shaft section 110 along the radial direction of the mounting hole 100 is the same. Accordingly, a uniform mounting gap is formed between the sealing hole section 100a and the sealing shaft section 110. The sealing ring 12 is disposed between the side wall of the sealing hole section 100a and the side wall of the sealing shaft section 110, and a uniform mounting gap is formed between the sealing hole section 100a and the sealing shaft section 110, so that the sealing ring 12 can be uniformly compressed and ensure the sealing effect.

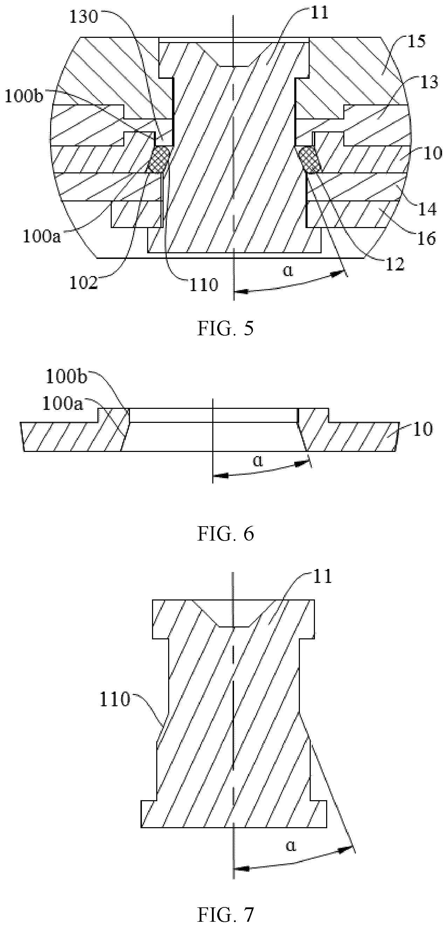

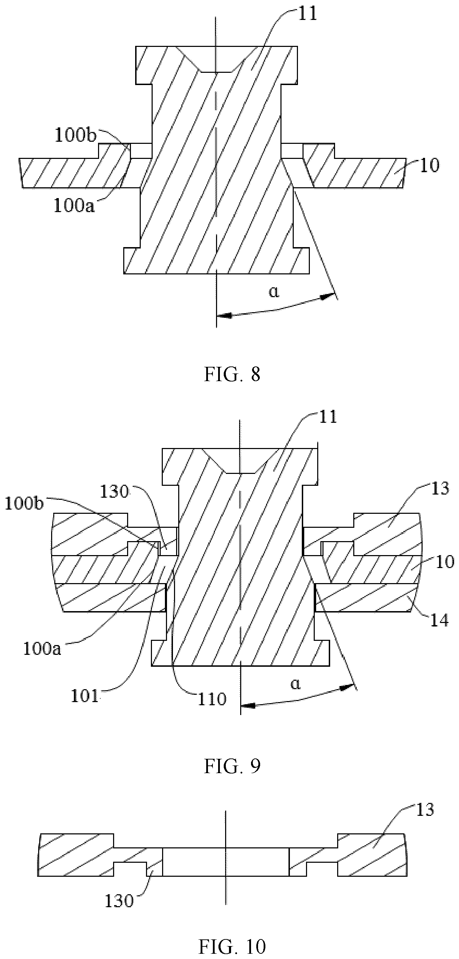

As shown in FIGS. 6 to 8, in some embodiments, the generatrix of the sealing hole section 100a and the generatrix of the sealing shaft section 110 are both straight lines. That is, the sealing hole section 100a is a circular table shaped hole, and the sealing shaft section 110 is a circular table shaped shaft, of which the structure is simple and facilitates the process. The generatrix of the sealing hole section 100a is parallel to the generatrix of the sealing shaft section 110, so that the sealing ring 12 can be uniformly compressed between the sealing hole section 100a and the sealing shaft section 110. During the process of the pole 11 being inserted into the mounting hole 100 and squeezing the sealing ring 12, the sealing ring 12 can be facilitated to move along the side wall, such that the sealing ring 12 moves from the ends having smaller diameter to the ends having lager diameter of the sealing hole section 100a and the sealing shaft section 110, so the sealing ring 12 can be fully compressed and the reliability of the sealing can be increased.

In some embodiments, along a direction (direction Y) pointing from a bottom part to a top part of the top cover plate 10, the side wall of the sealing hole section 100a and the side wall of the sealing shaft section 110 are both tilted in a direction close to the axis of the mounting hole 100. That is, the sealing hole section 100a and the sealing shaft section 110 both have a structure that is small on the top and large on the bottom, and a bottom end of the sealing hole section 100a and a bottom end of the sealing shaft section 110 are ends having larger diameter, and the top ends are ends having smaller diameter. The pole 11 is mounted into the mounting hole 100 from bottom to top, and is fixed at the top part of the top cover plate 10, so that it is more convenient to mount and fix the pole 11. In addition, since a bottom end of the pole 11 needs to be connected to an adapting sheet 16, and connected to the tab of the electrode assembly 3 through the adapting sheet 16.The pole 11 is mounted into the mounting hole 100 from bottom to top, which can prevent deformation or movement of the adapting sheet 16 during the mounting of the pole 11.

Of course, the sealing hole section 100a and the sealing shaft section 110 may further be configured to present structures that are large on the top and small on the bottom, so that top ends of the sealing hole section 100a and the sealing shaft section 110 are ends having larger diameter, and bottom ends are ends having smaller diameter, and the pole 11 is mounted into the mounting hole 100 from bottom to top.

In some embodiments, as shown in FIG. 7, the side wall of the sealing hole section 100a and the side wall of the sealing shaft section 110 are tilted with respect to the axis of the mounting hole 100 at an angle α of 5° to 45°, which can not only facilitate the mounting of the sealing ring 12, but further ensure the reliability of the sealing performance of the sealing ring 12. When α is less than 5°, since a small thickness of the top cover plate 10, the diameter of two ends of the sealing hole section 100a is almost the same as the diameter of two ends of the sealing shaft section 110, which is still not convenient for the mounting of the sealing ring 12. When α is greater than 45°, the distance between the sealing hole section 100a and the sealing shaft section 110 perpendicular to the side wall is too small, which will easily lead to excessive compression of the sealing ring 12 and produce damage, thus affecting the reliability of the sealing performance.

As shown in FIGS. 3, 5, 9, and 10, the top cover assembly 1 provided by the embodiments of the present application further includes a first insulating member 13 and a second insulating member 14. The first insulating member 13 and the second insulating member 14 are respectively located at both sides of the top cover plate 10 along the thickness direction thereof and fixed with respect to the top cover plate 10. Through holes are respectively provided on the first insulating member 13 and the second insulating member 14, allowing the pole 11 to penetrate. A fixation is formed to the pole 11 by the first insulating member 13 and the second insulating member 14 to prevent the pole 11 from wobbling in the mounting hole 100.

In one embodiment, the top cover plate 10 is made of metallic material. The first insulating member 13 and the second insulating member 14 can further achieve the insulation between the pole 11 and the top cover plate 10, and avoid the short circuit caused by the contact between the pole 11 and the top cover plate 10.

In another embodiment, the top cover plate 10 is made of an insulating material. The first insulating member 13 and the second insulating member 14 can be provided as independent components from the top cover plate 10 or can be integrally formed with the top cover plate 10.

The first insulating member 13, the second insulating member 14, the side wall of the sealing hole section 100a, and the side wall of the sealing shaft section 110 form a sealing cavity 101, and the sealing ring 12 is located in the sealing cavity 101. The first insulating member 13 and the second insulating member 14 form a restraint on the sealing ring 12 at the two ends of the mounting hole 100 along the axis direction respectively, to prevent the sealing ring 12 from slipping off along an end part of the sealing hole section 100a during the process of the pole 11 being inserted into the mounting hole 100 and squeezing the sealing ring 12. This affects an effective contact area between the sealing ring 12 and the sealing hole section 100a and an effective contact area between the sealing ring 12 and the sealing shaft section 110, thereby improving the reliability of the sealing performance.

Further, a thickness of the sealing ring 12 is not greater than a thickness of the top cover plate 10. A top part of the sealing ring 12 does not exceed a top part of the top cover plate 10, and a bottom part of the sealing ring 12 does not exceed a bottom part of the top cover plate 10. The sealing ring 12 is completely accommodated in the sealing hole section 100a along the thickness direction of the top cover plate 10. In this way, not only can the sealing ring 12 be fully compressed to improve an effective utilization rate of the sealing ring 12, that is, a portion of the sealing ring 12 exceeds the sealing hole section 100a cannot be compressed or fully compressed, so that this portion cannot have a sealing effect; but also, an overall thickness of the top cover assembly 1 can be reduced, and the energy density of the secondary battery can be improved.

Further, a gap 102 (refer to FIG. 5) is left between at least one top corner of the sealing cavity 101 and the sealing ring 12, and the gap 102 allows an elastic restoring force of the sealing ring 12 to be released, thereby avoiding damage to the sealing ring 12 under excessive pressing force.

Further, the first insulating member 13 is disposed at an end of the sealing hole section 100a having a smaller diameter end, that is, the first insulating member 13 is disposed at an end of the mounting hole 100 having a smaller diameter. Accordingly, the second insulating member 14 is disposed at an end of the sealing hole section 100a having a larger diameter. The mounting hole 100 further includes a restraint hole section 100b, and the restraint hole section 100b is disposed at an end of the sealing hole section 100a facing the first insulating member 13, and communicated with the sealing hole section 100a. A sharp edge of the sealing hole section 100a are eliminated by means of the restraint hole section 100b. That is, when the sealing hole section 100a penetrates the top cover plate 10 along the thickness direction of the top cover plate 10, a sharp acute angle is formed between an inner wall of the end of the sealing hole section 100a having a smaller diameter and the surface of the top cover plate 10, which easily causes damage to the edge of the sealing hole section 100a or scratches on the sealing ring 12. A restraint hole section 100b is provided at an end of the sealing hole section 100a having a smaller diameter, so an obtuse angle is formed between an inner wall of the sealing hole section 100a and an inner wall of the restraint hole section 100b, which effectively prevents damage to an edge of the sealing hole section 100a and scratches on the sealing ring 12.

The first insulating member 13 is provided with a restraint protrusion 130, and the restraint protrusion 130 is located between the restraint hole section 100b and the pole 11 (an annular gap between the restraint hole section 100b and the pole 11). On the one hand, the restraint protrusion 130 forms a reliable positioning and insulation between the top cover plate 10 and the pole 11, preventing the pole 11 from wobbling or short-circuiting with the top cover plate 10; on the other hand, the sealing ring 12 is ensured to be completely accommodated in the sealing hole section 100a, forming a reliable sealing performance.

Embodiments of the present application further provides a power consumption apparatus, which includes the secondary battery in the above embodiments, and the secondary battery is configured to provide electric energy.

Where, the power consumption apparatus may be a vehicle, for example, the vehicle may be fuel-powered vehicle, a gas-powered vehicle or a new energy vehicle, and the new energy vehicle may be a pure electric vehicle, a hybrid vehicle or an extended-range vehicle, and the like.

In addition, the power consumption may be other energy storage apparatuses, such as mobile phones, portable devices, notebook computers, electronic toys, electric tools, ships, spacecrafts, and the like, where the spacecrafts include airplanes, rockets, space shuttles and spaceships, and the like.

## Claims

1. A top cover assembly, comprising:
a top cover plate (10), the top cover plate (10) provided with a mounting hole (100), and the mounting hole (100) comprising a sealing hole section (100a);
a pole (11), configured to insert into the mounting hole (100), the pole (11) comprising a sealing shaft section (110), wherein the sealing shaft section (110) is configured to insert into the sealing hole section (100a), and a side wall of the sealing hole section (100a) and a side wall of the sealing shaft section (110) are both tilted with respect to an axis of the mounting hole (100); and
a sealing ring (12), disposed between the side wall of the sealing hole section (100a) and the side wall of the sealing shaft section (110);
a thickness of the sealing ring (12) is less than or equal to a thickness of the top cover plate (10), a top part of the sealing ring (12) does not exceed a top part of the top cover plate (10), and a bottom part of the sealing ring (12) does not exceed a bottom part of the top cover plate (10).

2. The top cover assembly according to claim 1, wherein along a direction pointing from a bottom part to a top part of the top cover plate (10), the side wall of the sealing hole section (100a) and the side wall of the sealing shaft section (110) are both tilted in a direction close to the axis of the mounting hole (100).

3. The top cover assembly according to claim 1 or 2, wherein the side wall of the sealing hole section (100a) and the side wall of the sealing shaft section (110) are tilted with respect to the axis of the mounting hole (100) at an angle of 5° to 45°.

4. The top cover assembly according to any one of claims 1 to 3, wherein along a thickness direction of the top cover plate (10), a distance between the side wall of the sealing hole section (100a) and the side wall of the sealing shaft section (110) is the same everywhere.

5. The top cover assembly according to any one of claims 1 to 4, wherein a generatrix of the sealing hole section (100a) and a generatrix of the sealing shaft section (110) are both straight lines, and the generatrix of the sealing hole section (100a) is parallel to the generatrix of the sealing shaft section (110).

6. The top cover assembly according to any one of claims 1 to 5, further comprising a first insulating member (13) and a second insulating member (14), wherein the first insulating member (13) and the second insulating member (14) are respectively located at both sides of the top cover plate (10);
the first insulating member (13), the second insulating member (14), the side wall of the sealing hole section (100a), and the side wall of the sealing shaft section (110) form a sealing cavity (101), and the sealing ring (12) is located in the sealing cavity (101).

7. The top cover assembly according to claim 6, wherein through holes are respectively provided on the first insulating member (13) and the second insulating member (14), allowing the pole (11) to penetrate, a fixation is formed to the pole (11) by the first insulating member (13) and the second insulating member (14).

8. The top cover assembly according to claim 6, wherein a gap (102) is left between at least one top corner of the sealing cavity (101) and the sealing ring (12).

9. The top cover assembly according to claim 6, wherein the first insulating member (13) is disposed at an end of the mounting hole (100) having a smaller diameter;
the mounting hole (100) further comprises a restraint hole section (100b), and the restraint hole section (100b) is disposed at an end of the sealing hole section (100a) facing the first insulating member (13), and communicated with the sealing hole section (100a); and
the first insulating member (13) is provided with a restraint protrusion (130), and the restraint protrusion (130) is located between the restraint hole section (100b) and the pole (11).

10. The top cover assembly according to claim 9, wherein an obtuse angle is formed between an inner wall of the sealing hole section (100a) and an inner wall of the restraint hole section (100b).

11. The top cover assembly according to any one of claims 1 to 10, wherein the top cover plate (10) is made of an insulating material.

12. A secondary battery, comprising the top cover assembly (1) according to any one of claims 1 to 11.

13. A power consumption apparatus, comprising the secondary battery according to claim 12, wherein the secondary battery is configured to provide electric energy.

## Patentansprüche

1. Deckelanordnung, umfassend:
eine Deckelplatte (10), wobei die Deckelplatte (10) mit einem Montageloch (100) versehen ist und das Montageloch (100) einen Dichtungslochabschnitt (100a) umfasst;
eine Stange (11), die so konfiguriert ist, dass sie in das Montageloch (100) eingesetzt werden kann, wobei die Stange (11) einen Dichtungsschaftabschnitt (110) umfasst, wobei der Dichtungsschaftabschnitt (110) so konfiguriert ist, dass er in den Dichtungslochabschnitt (100a) eingesetzt werden kann, und eine Seitenwand des Dichtungslochabschnitts (100a) und eine Seitenwand des Dichtungsschaftabschnitts (110) beide in Bezug auf eine Achse des Montagelochs (100) geneigt sind; und
einen Dichtungsring (12), der zwischen der Seitenwand des Dichtungslochabschnitts (100a) und der Seitenwand des Dichtungsschaftabschnitts (110) angeordnet ist;
eine Dicke des Dichtungsrings (12) kleiner oder gleich einer Dicke der Deckelplatte (10) ist, ein oberer Teil des Dichtungsrings (12) einen oberen Teil der Deckelplatte (10) nicht überschreitet und ein unterer Teil des Dichtungsrings (12) einen unteren Teil der Deckelplatte (10) nicht überschreitet.

2. Deckelanordnung nach Anspruch 1, wobei entlang einer Richtung, die von einem unteren Teil zu einem oberen Teil der Deckelplatte (10) zeigt, die Seitenwand des Dichtungslochabschnitts (100a) und die Seitenwand des Dichtungsschaftabschnitts (110) beide in einer Richtung nähernd der Achse des Montagelochs (100) geneigt sind.

3. Deckelanordnung nach Anspruch 1 oder 2, wobei die Seitenwand des Dichtungslochabschnitts (100a) und die Seitenwand des Dichtungsschaftabschnitts (110) in Bezug auf die Achse des Montagelochs (100) in einem Winkel von 5° bis 45° geneigt sind.

4. Deckelanordnung nach einem der Ansprüche 1 bis 3, wobei entlang einer Dickenrichtung der Deckelplatte (10) der Abstand zwischen der Seitenwand des Dichtungslochabschnitts (100a) und der Seitenwand des Dichtungsschaftabschnitts (110) überall gleich ist.

5. Deckelanordnung nach einem der Ansprüche 1 bis 4, wobei eine Mantellinie des Dichtungslochabschnitts (100a) und eine Mantellinie des Dichtungsschaftabschnitts (110) beide Geraden sind und die Mantellinie des Dichtungslochabschnitts (100a) parallel zur Mantellinie des Dichtungsschaftabschnitts (110) ist.

6. Deckelanordnung nach einem der Ansprüche 1 bis 5, ferner umfassend ein erstes Isolierelement (13) und ein zweites Isolierelement (14), wobei das erste Isolierelement (13) und das zweite Isolierelement (14) jeweils an einer entsprechenden der beiden Seiten der Deckelplatte (10) angeordnet sind;
das erste Isolierelement (13), das zweite Isolierelement (14), die Seitenwand des Dichtungslochabschnitts (100a) und die Seitenwand des Dichtungsschaftabschnitts (110) einen Dichtungshohlraum (101) bilden, und der Dichtungsring (12) in dem Dichtungshohlraum (101) angeordnet ist.

7. Deckelanordnung nach Anspruch 6, wobei in dem ersten Isolierelement (13) und dem zweiten Isolierelement (14) jeweils Durchgangslöcher vorgesehen sind, die das Durchdringen der Stange (11) ermöglichen, und eine Befestigung an der Stange (11) durch das erste Isolierelement (13) und das zweite Isolierelement (14) gebildet ist.

8. Deckelanordnung nach Anspruch 6, wobei zwischen mindestens einer oberen Ecke des Dichtungshohlraums (101) und dem Dichtungsring (12) ein Spalt (102) verbleibt.

9. Deckelanordnung nach Anspruch 6, wobei das erste Isolierelement (13) an einem Ende des Montagelochs (100) mit einem kleineren Durchmesser angeordnet ist;
das Montageloch (100) ferner einen Rückhaltelochabschnitt (100b) umfasst, und der Rückhaltelochabschnitt (100b) an einem Ende des Dichtungslochabschnitts (100a) angeordnet ist, das dem ersten Isolierelement (13) zugewandt ist, und mit dem Dichtungslochabschnitt (100a) in Verbindung steht; und
das erste Isolierelement (13) mit einem Rückhaltevorsprung (130) versehen ist, und der Rückhaltevorsprung (130) zwischen dem Rückhaltelochabschnitt (100b) und der Stange (11) angeordnet ist.

10. Deckelanordnung nach Anspruch 9, wobei ein stumpfer Winkel zwischen einer Innenwand des Dichtungslochabschnitts (100a) und einer Innenwand des Rückhaltelochabschnitts (100b) gebildet wird.

11. Deckelanordnung nach einem der Ansprüche 1 bis 10, wobei die Deckelplatte (10) aus einem isolierenden Material hergestellt ist.

12. Sekundärbatterie, die die Deckelanordnung (1) nach einem der Ansprüche 1 bis 11 umfasst.

13. Stromverbrauchsgerät, das die Sekundärbatterie nach Anspruch 12 umfasst, wobei die Sekundärbatterie so konfiguriert ist, dass sie elektrische Energie liefert.

## Revendications

1. Ensemble couvercle supérieur, comprenant :
une plaque de couvercle supérieur (10), la plaque de couvercle supérieur (10) étant munie d'un trou de montage (100), et le trou de montage (100) comprenant une section trou d'étanchéité (100a) ;
une barre (11), configurée pour s'insérer dans le trou de montage (100), la barre (11) comprenant une section arbre d'étanchéité (110), dans lequel la section arbre d'étanchéité (110) est configurée pour s'insérer dans la section trou d'étanchéité (100a), et une paroi latérale de la section trou d'étanchéité (100a) et une paroi latérale de la section arbre d'étanchéité (110) sont toutes les deux inclinées par rapport à un axe du trou de montage (100) ; et
une bague d'étanchéité (12), disposée entre la paroi latérale de la section trou d'étanchéité (100a) et la paroi latérale de la section arbre d'étanchéité (110) ;
une épaisseur de la bague d'étanchéité (12) est inférieure ou égale à une épaisseur de la plaque de couvercle supérieur (10), une partie supérieure de la bague d'étanchéité (12) ne dépasse pas une partie supérieure de la plaque de couvercle supérieur (10), et une partie inférieure de la bague d'étanchéité (12) ne dépasse pas une partie inférieure de la plaque de couvercle supérieur (10).

2. Ensemble couvercle supérieur selon la revendication 1, dans lequel le long d'une direction pointant d'une partie inférieure à une partie supérieure de la plaque de couvercle supérieur (10), la paroi latérale de la section trou d'étanchéité (100a) et la paroi latérale de la section arbre d'étanchéité (110) sont toutes les deux inclinées dans une direction proche de l'axe du trou de montage (100).

3. Ensemble couvercle supérieur selon la revendication 1 ou 2, dans lequel la paroi latérale de la section trou d'étanchéité (100a) et la paroi latérale de la section arbre d'étanchéité (110) sont inclinées par rapport à l'axe du trou de montage (100) selon un angle de 5° à 45°.

4. Ensemble couvercle supérieur selon l'une quelconque des revendications 1 à 3, dans lequel le long d'une direction d'épaisseur de la plaque de couvercle supérieur (10), une distance entre la paroi latérale de la section trou d'étanchéité (100a) et la paroi latérale de la section arbre d'étanchéité (110) est la même partout.

5. Ensemble couvercle supérieur selon l'une quelconque des revendications 1 à 4, dans lequel une génératrice de la section trou d'étanchéité (100a) et une génératrice de la section arbre d'étanchéité (110) sont toutes les deux des lignes droites, et la génératrice de la section trou d'étanchéité (100a) est parallèle à la génératrice de la section arbre d'étanchéité (110).

6. Ensemble couvercle supérieur selon l'une quelconque des revendications 1 à 5, comprenant en outre un premier organe isolant (13) et un deuxième organe isolant (14), dans lequel le premier organe isolant (13) et le deuxième organe isolant (14) sont respectivement situés sur les deux côtés de la plaque de couvercle supérieur (10) ;
le premier organe isolant (13), le deuxième organe isolant (14), la paroi latérale de la section trou d'étanchéité (100a), et la paroi latérale de la section arbre d'étanchéité (110) forment une cavité d'étanchéité (101), et la bague d'étanchéité (12) est située dans la cavité d'étanchéité (101).

7. Ensemble couvercle supérieur selon la revendication 6, dans lequel des trous traversants sont respectivement prévus sur le premier organe isolant (13) et le deuxième organe isolant (14), permettant à la barre (11) de pénétrer, une fixation est formée sur la barre (11) par le premier organe isolant (13) et le deuxième organe isolant (14).

8. Ensemble couvercle supérieur selon la revendication 6, dans lequel un espace (102) est laissé entre au moins un coin supérieur de la cavité d'étanchéité (101) et la bague d'étanchéité (12).

9. Ensemble couvercle supérieur selon la revendication 6, dans lequel e premier organe isolant (13) est disposé à une extrémité du trou de montage (100) ayant un plus petit diamètre ;
le trou de montage (100) comprend en outre une section trou de retenue (100b), et la section trou de retenue (100b) est disposée à une extrémité de la section trou d'étanchéité (100a) faisant face au premier organe isolant (13), et est en communication avec la section trou d'étanchéité (100a) ; et
le premier organe isolant (13) est muni d'une saillie de retenue (130), et la saillie de retenue (130) est située entre la section trou de retenue (100b) et la barre (11).

10. Ensemble couvercle supérieur selon la revendication 9, dans lequel un angle obtus est formé entre une paroi interne de la section trou d'étanchéité (100a) et une paroi interne de la section trou de retenue (100b).

11. Ensemble couvercle supérieur selon l'une quelconque des revendications 1 à 10, dans lequel la plaque de couvercle supérieur (10) est constituée d'un matériau isolant.

12. Batterie secondaire, comprenant l'ensemble couvercle supérieur (1) selon l'une quelconque des revendications 1 à 11.

13. Appareil de consommation de puissance, comprenant la batterie secondaire selon la revendication 12, dans lequel la batterie secondaire est configurée pour fournir de l'énergie électrique.
